# EUROPÄISCHE PATENTSCHRIFT

(11) **EP 0 859 296 B1**
(45) Veröffentlichungstag und Bekanntmachung des Hinweises auf die Patenterteilung: **28.01.2004**
(21) Anmeldenummer: 98102342.7
(22) Anmeldetag: 11.02.1998
(51) Int. Cl.: G05B 19/042

(54) **Verfahren zur Sicherung eines Haushaltsgerätes vor unbeabsichtigtem Eingriff in den gewählten Betriebsablauf**
Method to protect a household apparatus from accidental intervention during execution of chosen operations
Méthode pour isoler un appareil électroménager des interventions accidentelles durant les fonctionnements choisis

(30) Priorität: 15.02.1997 DE 19705818
(43) Veröffentlichungstag der Anmeldung: 19.08.1998
(73) Patentinhaber: AEG Hausgeräte GmbH, 90429 Nürnberg (DE)
(72) Erfinder: Wipperfürth, Franz-Josef, 90556 Cadolzburg (DE); Braun, Werner, 91166 Georgensgmünd (DE); Henninger, Alfred, 91438 Bad Windsheim (DE); Wick, Oliver, 90559 Burgthann (DE); Daume, Christian, 90559 Burgthann (DE)

(56) Entgegenhaltungen:
- EP-A- 0 141 468
- EP-A- 0 298 625
- FR-A- 2 447 056
- GB-A- 2 028 539
- US-A- 4 293 849
- US-A- 4 970 870

## Beschreibung

Die Erfindung betrifft ein Verfahren zur Sicherung eines Haushaltsgerätes, insbesondere einer mikroprozessorgesteuerten Waschmaschine vor unbeabsichtigtem Eingriff in das angewählte Waschprogramm, das über in einer Bedienungsblende angeordneter Wähl- und Eingabeelemente eingestellt wird.

Sicherheitseinrichtungen für Haushaltsgeräte haben generell die Aufgabe, den Benutzer, das zu behandelnde Gut, z. B. Wäsche und das Gerät selbst vor Schaden oder unbefugte Eingriffe zu schützen. So ist z. B. aus der DE 37 37 712 C2 ein Verfahren und eine Vorrichtung zum Schutz eines Elektroherdes vor unbeabsichtigtem Betrieb bekannt geworden. Das in dieser Druckschrift beschriebene Verfahren zur Sicherung eines Herdes ist jedoch nur für dieses spezielle Haushaltsgerät geeignet und ist bei Waschmaschinen nicht anwendbar.

Der Erfindung liegt die Aufgabe zugrunde, für Waschmaschinen ein Verfahren anzugeben, um das einmal gewählte bzw. eingestellte Waschprogramm gegen unbefugte Veränderungen durch Dritte zu schützen.

Die Lösung dieser Aufgabe gemäß der Erfindung ist dem kennzeichnenden Teil des Patentanspruchs 1 zu entnehmen. Vorteilhafte weitere Ausgestaltungen des Gegenstandes der Erfindung sind in den Unteransprüchen angegeben.

Die mit der Erfindung erzielbaren Vorteile sind unter anderem darin zu sehen, daß beispielsweise Kinder ein bereits gestartetes Waschprogramm nicht mehr unterbrechen oder verändern können, da die Funktion sämtlicher Wahl- und Eingabeelemente in der Schalterblende gesperrt ist.

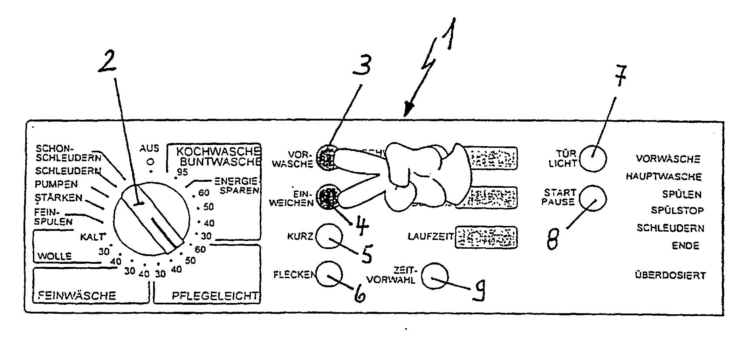

Ein Ausführungsbeispiel der Erfindung wird nachfolgend unter Zugrundelegung der Abbildung einer Schalterblende für eine mikroprozessorgesteuerte Waschmaschine im einzelnen näher beschrieben.

Die Schalterblende 1 nach der Zeichnung für eine programmgesteuerte bzw. mikroprozessorgesteuerte Waschmaschine hat in dem hier dargestellten Ausführungsbeispiel einen Drehwahlschalter 2 zum gleichzeitigen Einstellen von Grundwaschprogrammen mit den zugehörigen Temperaturbereichen für die verschiedenen Wäschearten. Ferner ist die Schalterblende mit mehreren Optionstasten 3, 4, 5 und 6 für die Anwahl bzw. Zuwahl von Zusatzfunktionen wie "Vorwäsche, Einweichen, Kurzprogramm, Fleckenprogramm" sowie mit einer Türöffnungstaste 7, einer Starttaste 8 und einer Zeitvorwahltaste 9 bestückt.

Um nun ein mittels des Drehwahlschalters 2 und ggf. Betätigen einer der Optionstasten 3 bis 6 gewähltes bzw. eingestelltes Waschprogramm für einen bestimmten Wäscheposten vor einem nachträglichen unbefugten Verändern, z. B. durch Kinder, zu schützen, wird durch gleichzeitiges Betätigen von mindestens zwei der Optionstasten, z. B. Betätigen der Tasten 3 und 4 für "Vorwäsche und Einweichen", eine elektrische Absicherung des angewählten Waschprogramms durch die Programmsteuereinrichtung vorgenommen. Das gleichzeitige Betätigen der beiden Tasten 3 und 4 aktiviert eine Waschprogrammsicherung in der Weise, daß danach bei Betätigen irgendeiner der Tasten 3 bis 9 und/oder des Drehwahlschalters 2 diese Betätigungen ohne Folge auf das gewählte Waschprogramm bleiben und dieses damit störungsfrei bis zum Programmende abgearbeitet wird. Durch die Auslösung bzw. Aktivierung der elektrischen Programm-Sicherung sind sämtliche Wähl- und Eingabeelemente 3 bis 9 während der Programm-Sicherungsphase in ihrer Betätigungsfunktion gesperrt und damit wirkungslos. Die Auslösung der Aktivierung der Programmsicherung wird in der Schalterblende zweckmäßig optisch angezeigt. Eine akustische Quittierung der ausgelösten Programmsicherung wäre denkbar. Ebenso wäre Kombination aus beiden Anzeigen möglich.

Besonders zweckmäßig ist es, daß bei einer Betätigung der Wähl- und Eingabeelemente 2 bzw. 3 bis 9 während der Programmsicherungsphase Blinkvorgänge in der Schalterblende 1 ausgelöst werden.

Zweckmäßig wird die Programmsicherung so ausgelegt, daß diese auch bei einem Netzausfall oder auch bei einem Ausschalten der Waschmaschine oder nach Beendigung des Waschvorganges aktiviert bleibt.
Die Deaktivierung der beschriebenen Programmsicherung wird ebenfalls durch gleichzeitiges Betätigen der beiden Tasten 3 und 4 vorgenommen.

## Patentansprüche

1. Verfahren zur Sicherung einer mikroprozessorgesteuerten Waschmaschine vor unbeabsichtigtem Eingriff in das angewählte Waschprogramm, das über in einer Bedienungsblende (1) angeordneter Wähl- und Eingabeelemente (2-8) eingestellt wird, **dadurch gekennzeichnet, daß** durch gleichzeitiges Betätigen von mindestens zwei der Programmeingabeelemente (3, 4) eine elektrische Sicherungs-Sperre für das angewählte Programm aktiviert wird.

2. Verfahren nach Anspruch 1, **dadurch gekennzeichnet, daß** die Sperrung des angewählten Programms durch eine codierte Mehrfachbetätigung von Eingabeelementen ausgeführt wird.

3. Verfahren nach Anspruch 1 oder 2, **dadurch gekennzeichnet, daß** die Aktivierung der Programmsicherung durch gleichzeitiges Betätigen von zwei Drucktasten vorgenommen wird.

4. Verfahren nach Anspruch 1 oder einem der folgenden, **dadurch gekennzeichnet, daß** die Aktivierung der Programmabsicherung optisch und/oder akustisch angezeigt wird.

5. Verfahren nach Anspruch 1, **dadurch gekennzeichnet, daß** beim Betätigen der Wähl- und Eingabeelemente während der Programmsicherungsphase Blinkvorgänge in der Schalterblende ausgelöst werden.

## Claims

1. Method of protecting a microprocessor-controlled washing machine from unintentional interference with the selected wash programme, which is set via selection and input elements (2-8) disposed in an operating screen (1), **characterised in that** by simultaneous actuation of at least two of the programme input elements (3, 4), an electrical safety lock for the selected programme is activated.

2. Method according to claim 1, **characterised in that** the locking of the selected programme is carried out by a coded multiple actuation of input elements.

3. Method according to claim 1 or 2, **characterised in that** activation of the programme lock is carried out by simultaneous actuation of two push buttons.

4. Method according to claim 1 or one of the subsequent claims, **characterised in that** activation of the programme lock is indicated visually and/or acoustically.

5. Method according to claim 1, **characterised in that** upon actuation of the selection and input elements during the programme lock phase, a light flashes in the control screen.

## Revendications

1. Procédé pour assurer une machine à laver commandée par microprocesseur à l'encontre d'une intervention non intentionnelle dans le programme de lavage sélectionné, qui est réglé par des éléments de sélection et d'entrée (2-8) disposés dans un panneau de commande (1), **caractérisé en ce que** par l'actionnement simultané d'au moins deux des éléments d'entrée de programme (3, 4), un verrouillage de sécurité électrique pour le programme sélectionné est activé.

2. Procédé selon la revendication 1, **caractérisé en ce que** le verrouillage du programme sélectionné est exécuté par un actionnement multiple codé d'éléments d'entrée.

3. Procédé selon la revendication 1 ou 2, **caractérisé en ce que** l'activation de la sécurité du programme est effectuée par l'actionnement simultané de deux touches.

4. Procédé selon la revendication 1 ou l'une des suivantes, **caractérisé en ce que** l'activation de la sécurité du programme est indiquée d'une manière optique et/ou acoustique.

5. Procédé selon la revendication 1, **caractérisé en ce que** lors de l'actionnement des éléments de sélection et d'entrée pendant la phase de sécurité du programme, des opérations clignotantes sont déclenchées dans le panneau de commande.
